# EUROPÄISCHE PATENTANMELDUNG

(11) **EP 4 826 262 A1**
(43) Veröffentlichungstag der Anmeldung: **21.10.2026**
(21) Anmeldenummer: 25171413.5
(22) Anmeldetag: 17.04.2025
(51) Int. Cl.: F16B 5/00, F16B 2/22, F16B 21/07

(54) **VERBINDUNGSEINHEIT UND VERBINDUNGSVORRICHTUNG**

(71) Anmelder: Owomo GmbH, 59379 Selm (DE)
(72) Erfinder: Bader, Olaf, 59379 Selm (DE)
(74) Vertreter: Bourgeois, Christian

(57) **Zusammenfassung**

Die Erfindung betrifft eine Verbindungseinheit (1) zum Herstellen einer zerstörungsfrei lösbaren Verbindung zwischen wenigstens zwei Objekten. Um eine einfacher und schneller handhabbare Möglichkeit zum zerstörungsfrei lösbaren Verbinden von wenigstens zwei Objekten bereitzustellen, weist die Verbindungseinheit (1) wenigstens einen im Querschnitt U-förmig ausgebildeten Verbindungsabschnitt (2), der zwei parallel zueinander verlaufende Verbindungsschenkel (3, 4) und einen die Verbindungsschenkel (3, 4) randseitig miteinander verbindenden Steg (5) aufweist, und wenigstens einen mit dem Steg (5) verbundenen Befestigungsabschnitt (6) auf, über den die Verbindungseinheit (1) an einem der Objekte befestigbar ist, wobei auf einander gegenüberliegenden Seiten des jeweiligen Verbindungsschenkels (3, 4) im Querschnitt keilförmig ausgebildete, in Längsrichtung der Verbindungseinheit (1) verlaufende und sich jeweils von dem Befestigungsabschnitt (6) weg verjüngende Hakenvorsprünge (7) angeordnet sind.

## Beschreibung

Die Erfindung betrifft eine Verbindungseinheit und eine Verbindungsvorrichtung zum Herstellen einer zerstörungsfrei lösbaren Verbindung zwischen wenigstens zwei Objekten.

Aus DE 84 09 701 U1 ist es beispielsweise bekannt, zwei Objekte in Form von Kissen über Klettverbindungen zerstörungsfrei lösbar miteinander zu verbinden. Auch aus DE 202 18 818 U1 ist ein zerstörungsfrei lösbares Verbinden von Objekten in Form von Kissen bekannt.

Es ist eine Aufgabe der Erfindung, eine einfacher und schneller handhabbare Möglichkeit zum zerstörungsfrei lösbaren Verbinden von wenigstens zwei Objekten bereitzustellen.

Diese Aufgabe wird durch Patentanspruch 1 gelöst. Vorteilhafte Ausgestaltungen sind in den abhängigen Patentansprüchen, der nachfolgenden Beschreibung und den Figuren wiedergegeben, wobei diese Ausgestaltungen jeweils für sich genommen oder Kombination von wenigstens zwei dieser Ausgestaltungen miteinander einen vorteilhaften und/oder weiterbildenden Aspekt der Erfindung darstellen können.

Eine erfindungsgemäße Verbindungseinheit zum Herstellen einer zerstörungsfrei lösbaren Verbindung zwischen wenigstens zwei Objekten weist wenigstens einen im Querschnitt U-förmig ausgebildeten Verbindungsabschnitt, der zwei parallel zueinander verlaufende Verbindungsschenkel und einen die Verbindungsschenkel randseitig miteinander verbindenden Steg aufweist, und wenigstens einen mit dem Steg verbundenen Befestigungsabschnitt auf, über den die Verbindungseinheit an einem der Objekte befestigbar ist, wobei auf einander gegenüberliegenden Seiten des jeweiligen Verbindungsschenkels im Querschnitt keilförmig ausgebildete, in Längsrichtung der Verbindungseinheit verlaufende und sich jeweils von dem Befestigungsabschnitt weg verjüngende Hakenvorsprünge angeordnet sind.

Erfindungsgemäß kann eine zerstörungsfrei lösbare Verbindung zwischen wenigstens zwei Objekten dadurch hergestellt werden, dass an jedem Objekt eine erfindungsgemäße Verbindungseinheit befestigt wird und die Verbindungseinheiten anschließend ineinander eingefügt, beispielsweise eingesteckt, werden, so dass die beiden Verbindungseinheiten zerstörungsfrei lösbar miteinander verbunden sind. Durch die erfindungsgemäße Ausgestaltung der Verbindungseinheiten bzw. der Hakenvorsprünge derselben hintergreifen dabei die Hakenvorsprünge der einen Verbindungseinheit die Hakenvorsprünge der anderen Verbindungseinheit.

Die zerstörungsfrei lösbare Verbindung zwischen den wenigstens zwei Objekten über zwei erfindungsgemäße Verbindungseinheiten kann auf Zug belastet werden, ohne dass Verbindung dadurch gelöst wird, was durch das gegenseitige Hintergreifen der Hakenvorsprünge gewährleistet wird. Die Verbindung zwischen den beiden Verbindungseinheiten kann beispielsweise als Rastverbindung bezeichnet werden.

Soll die Verbindung zwischen den beiden erfindungsgemäßen Verbindungseinheiten bzw. den damit verbundenen Objekten zerstörungsfrei gelöst werden, können die Verbindungseinheiten parallel zu ihren Längserstreckungen relativ zueinander bewegt bzw. verschoben werden, bis die eine Verbindungseinheit nicht mehr in die andere Verbindungseinheit eingreift. Anschließend können die Verbindungseinheiten bei Bedarf wieder miteinander verbunden werden, indem die Verbindungseinheiten quer zu ihren Längserstreckungen relativ zueinander bewegt und hierdurch wieder ineinander eingefügt werden. Diese Relativbewegung zwischen den Verbindungseinheiten kann eine Bewegung quer zu den Längserstreckungen der Verbindungseinheiten oder parallel zu diesen Längserstreckungen sein. Sowohl die Herstellung der zerstörungsfrei lösbaren Verbindung zwischen wenigstens zwei Objekten als auch das Lösen dieser Verbindung kann gemäß der Erfindung somit auf einfache Art und Weise und zudem schnell erfolgen.

Zwischen den beiden parallel zueinander verlaufenden Verbindungsschenkeln des im Querschnitt U-förmig ausgebildeten Verbindungsabschnitts ist ein Aufnahmeraum ausgebildet, der an einer Seite durch den die Verbindungsschenkel randseitig miteinander verbindenden Steg geschlossen ist und an einer dem Steg gegenüberliegenden Seite offen ausgebildet ist. In diesen Aufnahmeraum einer erfindungsgemäßen Verbindungseinheit kann zum Herstellen einer zerstörungsfrei lösbaren Verbindung zwischen Objekten ein Verbindungsschenkel einer weiteren erfindungsgemäßen Verbindungseinheit eingefügt, beispielsweise eingesteckt oder eingeschoben, werden, und zwar derart, dass Hakenvorsprünge an dem in den Aufnahmeraum eingesteckten Verbindungsschenkel der einen Verbindungseinheit die in den Aufnahmeraum hineinragenden Hakenvorsprünge der beiden Verbindungsschenkel der anderen Verbindungseinheit hintergreifen.

Der Befestigungsabschnitt der erfindungsgemäßen Verbindungseinheit dient zum Befestigen der Verbindungseinheit an einem der zerstörungsfrei lösbar miteinander zu verbindenden Objekte. Der Befestigungsabschnitt kann beispielsweise bandförmig ausgebildet sein. Der Befestigungsabschnitt kann sich beispielsweise über die gesamte Länge des Verbindungsabschnitts erstrecken, wobei die Länge des Verbindungsabschnitts parallel zur Längserstreckung der Verbindungseinheit gegeben ist. Der Befestigungsabschnitt kann beispielsweise durch ein Vernähen, Verklammern oder dergleichen an einem Objekt befestigt werden.

An jedem Verbindungsschenkel der erfindungsgemäßen Verbindungseinheit sind auf einander gegenüberliegenden Seiten im Querschnitt keilförmig ausgebildete, in Längsrichtung der Verbindungseinheit verlaufende und sich jeweils von dem Befestigungsabschnitt weg verjüngende Hakenvorsprünge angeordnet. Wenigstens ein Hakenvorsprung kann sich beispielsweise über die gesamte Länge der Verbindungseinheit oder lediglich über einen Teil dieser Länge erstrecken. Wenigstens ein Hakenvorsprung kann eine Querschnittsfläche in Form eines stumpfwinkligen Dreiecks aufweisen, so dass der Hakenvorsprung auf seiner dem Steg zugewandten Seite eine Hinterschneidung ausbildet. Hierdurch kann eine noch robustere bzw. belastbarere zerstörungsfrei lösbare Verbindung zwischen wenigstens zwei Objekten hergestellt werden, insbesondere wenn alle Hakenvorsprünge der Verbindungseinheit entsprechend ausgebildet sind.

Die erfindungsgemäße Verbindungseinheit kann beispielsweise als lang gestrecktes Profil bzw. strangförmig ausgebildet sein. Die erfindungsgemäße Verbindungseinheit kann beispielsweise ein Spritzgussbauteil oder ein extrudiertes Bauteil sein.

Gemäß einer vorteilhaften Ausgestaltung ist an einander zugewandten Seiten der Verbindungsschenkel in einem zwischen den Hakenvorsprüngen und dem Steg angeordneten Bereich jeweils wenigstens ein in Längsrichtung der Verbindungseinheit verlaufender Führungsvorsprung angeordnet, wobei die Führungsvorsprünge in einem Abstand relativ zueinander angeordnet sind. Die Führungsvorsprünge können dazu verwendet werden, einen freien Endabschnitt eines in den Aufnahmeraum zwischen den beiden Verbindungsschenkeln der Verbindungseinheit eingefügten Verbindungsschenkels einer weiteren Verbindungseinheit zu führen, sowohl beim Einfügen des Verbindungsschenkels in den Aufnahmeraum als auch bei hergestellter störungsfrei lösbarer Verbindung zwischen den beiden Verbindungseinheiten. Wenigstens ein Führungsvorsprung kann sich beispielsweise über die gesamte Länge der Verbindungseinheit oder lediglich über einen Teil dieser Länge erstrecken.

Gemäß einer weiteren vorteilhaften Ausgestaltung ist wenigstens ein Führungsvorsprung im Querschnitt keilförmig ausgebildet, wobei sich dieser Führungsvorsprung von dem Befestigungsabschnitt weg verjüngt. Hierdurch weist der Führungsvorsprung eine geneigte Führungsfläche auf, die in Richtung des Stegs bzw. Befestigungsabschnitts ansteigt. Dadurch wird das Einfügen eines Verbindungsschenkels einer Verbindungseinheit den Aufnahmeraum der anderen Verbindungseinheit vereinfacht, indem verhindert wird, dass der einzufügende Verbindungsschenkel von dem Führungsvorsprung blockiert bzw. aufgehalten wird.

Gemäß einer weiteren vorteilhaften Ausgestaltung sind die Hakenvorsprünge an einem freien Endabschnitt des jeweiligen Verbindungsschenkels angeordnet, dessen Länge kürzer als eine Hälfte einer Länge des jeweiligen Verbindungsschenkels ist, wobei die Hakenvorsprünge in einem Abstand zu dem freien Ende des freien Endabschnitts des jeweiligen Verbindungsschenkels angeordnet sind. Werden zwei entsprechend ausgebildete Verbindungseinheiten zum Herstellen einer zerstörungsfrei lösbaren Verbindung zwischen den Verbindungseinheiten ineinandergefügt, verbleibt durch vorliegende Ausgestaltung ein Spiel, durch das die ineinander eingefügten Verbindungseinheiten um ein bestimmtes Ausmaß quer zu ihren Längserstreckungen relativ zueinander beweglich verbleiben. Hierdurch können beispielsweise Fertigungstoleranzen oder dergleichen ausgeglichen werden.

Gemäß einer weiteren vorteilhaften Ausgestaltung ist der Befestigungsabschnitt im Querschnitt mit einem mittigen Bereich einer Außenseite des Stegs verbunden, wobei zwischen einem jeweiligen Längsrand der Außenseite des Stegs und dem Befestigungsabschnitt eine sich über eine Länge des Stegs erstreckende, nutförmig ausgebildete Vertiefung angeordnet ist. Die nutförmig ausgebildete Vertiefung an der Außenseite des Stegs kann beispielsweise zum Herstellen einer zerstörungsfrei lösbaren Verbindung zwischen entsprechend ausgebildeten Verbindungseinheiten genutzt werden, beispielsweise indem eine Schließeinheit, beispielsweise eine unten beschriebene Schließeinheit, in die nutförmige Vertiefung eingreift, um eine Schließkraft auf die Verbindungseinheit auszuüben.

Gemäß einer weiteren vorteilhaften Ausgestaltung ist die Verbindungseinheit zumindest teilweise aus einem Kunststoff hergestellt. Hierdurch kann die Verbindungseinheit teilweise oder vollständig flexibel bzw. elastisch ausgebildet sein. Dies macht es möglich, dass sich die Verbindungseinheit an eine Formgebung eines Objekts und beispielsweise auch an eine Änderung der Formgebung des Objekts anpassen kann.

Gemäß einer weiteren vorteilhaften Ausgestaltung ist die Verbindungseinheit monolithisch ausgebildet. Hierdurch kann die Verbindungseinheit auf einfache Art und Weise und ohne das Erfordernis von Montageschritten, beispielsweise unter Verwendung eines Spritzgießverfahrens oder eines Extrusionsverfahrens, hergestellt werden. Dadurch kann die Verbindungseinheit kostengünstiger hergestellt werden.

Eine erfindungsgemäße Verbindungsvorrichtung zum Herstellen einer zerstörungsfrei lösbaren Verbindung zwischen wenigstens zwei Objekten weist wenigstens zwei Verbindungseinheiten nach einer der vorgenannten Ausgestaltungen oder einer Kombination von wenigstens zwei dieser Ausgestaltungen miteinander auf, wobei eine der Verbindungseinheiten an dem einen Objekt befestigbar ist und die andere der Verbindungseinheiten an dem anderen Objekt befestigbar ist.

Mit der Verbindungsvorrichtung sind die oben mit Bezug auf die Verbindungseinheit genannten Vorteile entsprechend verbunden.

Gemäß einer vorteilhaften Ausgestaltung weist die Verbindungsvorrichtung wenigstens eine bandförmig ausgebildete Verbindungsleiste auf, die auf einander gegenüberliegenden Seiten einer Längsmittelachse der Verbindungsleiste angeordnete Verbindungsabschnitte aufweist, wobei auf einander gegenüberliegenden Seiten des jeweiligen Verbindungsabschnitts der Verbindungsleiste im Querschnitt keilförmig ausgebildete, sich in Längsrichtung der Verbindungsleiste erstreckende und sich zum jeweilig nächstliegend angeordneten Längsrand der Verbindungsleiste hin verjüngende Hakenvorsprünge angeordnet sind. Die Verbindungseinheiten können über die Verbindungsleiste zerstörungsfrei lösbar miteinander verbunden werden, was eine Alternative zu einer direkten Verbindung der Verbindungseinheiten miteinander darstellt. Zum Herstellen der zerstörungsfrei lösbaren Verbindung kann die Verbindungsleiste in den Aufnahmeraum von wenigstens einer Verbindungseinheit eingesteckt oder parallel zu einer Längserstreckung der Verbindungseinheit in den Aufnahmeraum eingeschoben werden. Die Verbindungsleiste kann zuerst mit einer Verbindungseinheit und anschließend mit der anderen Verbindungseinheit verbunden werden. Alternativ kann die Verbindungsleiste gleichzeitig mit den beiden Verbindungseinheiten verbunden werden. Zum Lösen der zerstörungsfrei lösbaren Verbindung kann die Verbindungsleiste beispielsweise entlang der Längserstreckungen der Verbindungseinheiten aus den Verbindungseinheiten herausgezogen werden. Auch gemäß dieser Alternative kann somit die zerstörungsfrei lösbare Verbindung zwischen den Verbindungseinheiten auf einfache Art und Weise sowie schnell hergestellt und wieder gelöst werden. Wenigstens ein Hakenvorsprung kann sich beispielsweise über die gesamte Länge der Verbindungsleiste oder lediglich über einen Teil dieser Länge erstrecken. Wenigstens ein Hakenvorsprung kann eine Querschnittsfläche in Form eines stumpfwinkligen Dreiecks aufweisen, so dass der Hakenvorsprung auf seiner dem nächstliegenden freien Ende bzw. Rand der Verbindungsleiste abgewandten Seite eine Hinterschneidung ausbildet. Hierdurch kann eine noch robustere bzw. belastbarere zerstörungsfrei lösbare Verbindung zwischen wenigstens zwei Objekten hergestellt werden, insbesondere wenn alle Hakenvorsprünge der Verbindungseinheiten entsprechend ausgebildet sind.

Gemäß einer weiteren vorteilhaften Ausgestaltung ist an einander abgewandten Seiten des jeweiligen Verbindungsabschnitts der Verbindungsleiste in einem zwischen den Hakenvorsprüngen und der Längsmittelachse der Verbindungsleiste angeordneten Bereich jeweils wenigstens ein in Längsrichtung der Verbindungsleiste verlaufender Führungsvorsprung angeordnet, wobei die Führungsvorsprünge in einem Abstand relativ zueinander angeordnet sind. Der jeweilige Führungsvorsprung der Verbindungsleiste dient dazu, die Verbindungsleiste beim Einfügen in einen Aufnahmeraum einer weiteren Verbindungseinheit zu führen. Gleichzeitig können die Führungsvorsprünge der Verbindungsleiste dazu dienen, die freien Endabschnitte der Verbindungsschenkel einer Verbindungseinheit, in deren Aufnahmeraum die Verbindungsleiste teilweise eingefügt ist, in einem bestimmten Abstand zueinander zu halten.

Gemäß einer weiteren vorteilhaften Ausgestaltung ist wenigstens ein Führungsvorsprung der Verbindungsleiste im Querschnitt keilförmig ausgebildet, wobei sich dieser Führungsvorsprung zum jeweilig nächstliegend angeordneten Längsrand der Verbindungsleiste hin verjüngt. Hierdurch können beim Einfügen der Verbindungsleiste in den Aufnahmeraum einer Verbindungseinheit die freien Endabschnitte der Verbindungsschenkel der Verbindungseinheit mit den Führungsvorsprüngen der Verbindungsleiste geführt werden, was das Einfügen der Verbindungsleiste in den Aufnahmeraum der Verbindungseinheit vereinfacht.

Gemäß einer weiteren vorteilhaften Ausgestaltung ist die Verbindungsleiste zumindest teilweise aus einem Kunststoff hergestellt. Hierdurch kann die Verbindungsleiste teilweise oder vollständig flexibel bzw. elastisch ausgebildet sein. Dies macht es möglich, dass sich die Verbindungsleiste an eine Formgebung eines Objekts und beispielsweise auch an eine Änderung der Formgebung des Objekts anpassen kann.

Gemäß einer weiteren vorteilhaften Ausgestaltung ist die Verbindungsleiste monolithisch ausgebildet. Hierdurch kann die Verbindungsleiste auf einfache Art und Weise und ohne das Erfordernis von Montageschritten hergestellt werden. Dadurch kann die Verbindungsleiste kostengünstiger hergestellt werden.

Gemäß einer weiteren vorteilhaften Ausgestaltung weist die Verbindungsvorrichtung wenigstens eine Schließeinheit zum Verbinden der Verbindungseinheiten miteinander oder zum Verbinden der beiden Verbindungseinheiten mit der Verbindungsleiste auf, wobei die Schließeinheit eine trapezförmig ausgebildete Schließaufnahme aufweist, die von einem aufgeweitet ausgebildeten eingangsseitigen Ende der Schließeinheit durchgehend zu einem verjüngt ausgebildeten ausgangsseitigen Ende der Schließeinheit verläuft und seitlich durch jeweils einen Schließvorsprung der Schließeinheit begrenzt ist. Die Schließeinheit kann beispielsweise dazu verwendet werden, zwei Verbindungseinheiten direkt miteinander oder über eine Verbindungsleiste mittelbar miteinander zu verbinden. Dabei kann die Schließeinheit entlang der Längserstreckung der Verbindungseinheiten auf die Verbindungseinheiten aufgeschoben werden und hierdurch die Verbindungseinheiten nach dem Reißverschlussprinzip aufeinander zu bewegen, wodurch sich die Hakenvorsprünge der Verbindungseinheiten bzw. der Verbindungseinheiten und der Verbindungsleiste fortschreitend hintergreifen. Dabei kann ein Abstand zwischen den Schließvorsprüngen der Schließeinheit an dem aufgeweitet ausgebildeten eingangsseitigen Ende der Schließeinheit um ein bestimmtes Ausmaß größer sein als ein Abstand zwischen den Außenseiten der Schenkel der miteinander verbundenen Verbindungseinheiten.

Gemäß einer weiteren vorteilhaften Ausgestaltung ist an einer dem jeweils anderen Schließvorsprung zugewandten Seite des jeweiligen Schließvorsprungs eine sich über die gesamte Länge des jeweiligen Schließvorsprungs erstreckende Hinterschneidung ausgebildet. Hierdurch kann beim Aufschieben der Schließeinheit in Längsrichtung der Verbindungseinheiten auf die Verbindungseinheiten vermieden werden, dass sich die Schließeinheit von den Verbindungseinheiten löst.

Im Folgenden wird die Erfindung unter Bezugnahme auf die beigefügten Figuren anhand bevorzugter Ausführungsformen beispielhaft erläutert, wobei die nachfolgend genannten Merkmale sowohl jeweils für sich genommen als auch in unterschiedlicher Kombination miteinander einen vorteilhaften und/oder weiterbildenden Aspekt der Erfindung darstellen können. Es zeigt:
- Fig. 1: einen schematischen Stirnansicht eines Ausführungsbeispiels für eine erfindungsgemäße Verbindungseinheit;
- Fig. 2: eine schematische und perspektivische Darstellung eines Längenabschnitts der in Fig. 1 gezeigten Verbindungseinheit;
- Fig. 3A: eine schematische Stirnansicht eines Ausführungsbeispiels für eine erfindungsgemäße Verbindungsvorrichtung in einem ersten Belastungszustand;
- Fig. 3B: eine schematische Stirnansicht der in Fig. 3A gezeigten Verbindungsvorrichtung in einem zweiten Belastungszustand;
- Fig. 4A: eine schematische Stirnansicht eines weiteren Ausführungsbeispiels für eine erfindungsgemäße Verbindungsvorrichtung in einem ersten Belastungszustand;
- Fig. 4B: eine schematische Stirnansicht der in Fig. 4A gezeigten Verbindungsvorrichtung in einem zweiten Belastungszustand;
- Fig. 5: eine schematische und perspektivische Darstellung eines Abschnitts der in den Fign. 4A und 4B gezeigten Verbindungsleiste;
- Fig. 6: eine schematische und perspektivische Darstellung eines Ausführungsbeispiels für eine Schließeinheit für eine erfindungsgemäße Schließvorrichtung; und
- Fig. 7: eine schematische Stirnansicht der in Fig. 6 gezeigten Schließeinheit.

In den Figuren sind gleiche bzw. funktionsgleiche Bauteile mit denselben Bezugszeichen versehen. Eine wiederholte Beschreibung solcher Bauteile kann weggelassen sein.

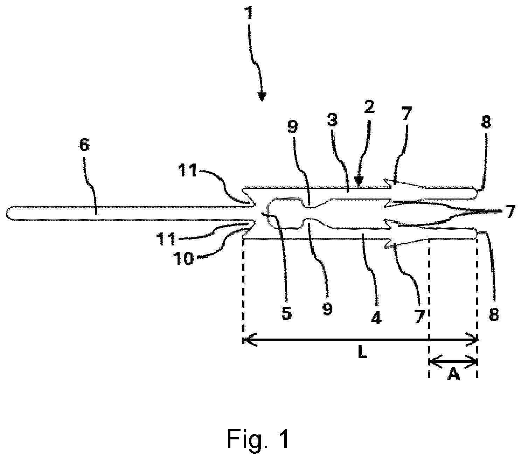

Fig. 1 zeigt einen schematischen Stirnansicht eines Ausführungsbeispiels für eine erfindungsgemäße Verbindungseinheit 1 zum Herstellen einer zerstörungsfrei lösbaren Verbindung zwischen wenigstens zwei nicht gezeigten Objekten. Die Verbindungseinheit 1 ist vollständig aus einem Kunststoff hergestellt und monolithisch ausgebildet.

Die Verbindungseinheit 1 weist einen im Querschnitt U-förmig ausgebildeten Verbindungsabschnitt 2 auf, der zwei parallel zueinander verlaufende Verbindungsschenkel 3 und 4 und einen die Verbindungsschenkel 3 und 4 randseitig miteinander verbindenden Steg 5 aufweist.

Zudem weist die Verbindungseinheit 1 einen mit dem Steg 5 verbundenen, bandförmig ausgebildeten Befestigungsabschnitt 6, über den die Verbindungseinheit 1 an einem der Objekte befestigbar ist.

Auf einander gegenüberliegenden Seiten des jeweiligen Verbindungsschenkels 3 bzw. 4 sind im Querschnitt keilförmig ausgebildete, in der senkrecht auf der Zeichenebene von Fig. 1 stehenden Längsrichtung der Verbindungseinheit 1 verlaufende und sich jeweils von dem Befestigungsabschnitt 6 weg verjüngende Hakenvorsprünge 7 angeordnet. Die Hakenvorsprünge 7 sind an einem freien Endabschnitt des jeweiligen Verbindungsschenkels 3 bzw. 4 angeordnet, dessen Länge kürzer als eine Hälfte einer in der Zeichenebene von Fig. 1 liegenden Länge L des jeweiligen Verbindungsschenkels 3 bzw. 4 ist. Die Hakenvorsprünge 7 sind in einem Abstand A zu dem freien Ende 8 des freien Endabschnitts des jeweiligen Verbindungsschenkels 3 bzw. 4 angeordnet. Jeder Hakenvorsprung 7 weist eine Querschnittsfläche in Form eines stumpfwinkligen Dreiecks auf, so dass der Hakenvorsprung 7 auf einer dem Steg 5 zugewandten Seite eine Hinterschneidung ausbildet.

An einander zugewandten Seiten der Verbindungsschenkel 3 und 4 ist in einem zwischen den Hakenvorsprüngen 7 und dem Steg 5 angeordneten Bereich jeweils wenigstens ein in die senkrecht auf der Zeichenebene von Fig. 1 stehende Längsrichtung der Verbindungseinheit 1 verlaufender Führungsvorsprung 9 angeordnet. Die beiden Führungsvorsprünge 9 sind in einem Abstand relativ zueinander angeordnet. Jeder Führungsvorsprung 9 ist im Querschnitt keilförmig ausgebildet, wobei sich der jeweilige Führungsvorsprung 9 von dem Befestigungsabschnitt 6 weg verjüngt.

Der Befestigungsabschnitt 6 ist im Querschnitt mit einem mittigen Bereich einer Außenseite 10 des Stegs 5 verbunden. Zwischen einem jeweiligen senkrecht auf der Zeichenebene von Fig. 1 stehenden Längsrand der Außenseite 10 des Stegs 5 und dem Befestigungsabschnitt 6 ist jeweils eine sich über eine senkrecht auf der Zeichenebene von Fig. 1 stehende Länge des Stegs 5 erstreckende, nutförmig ausgebildete Vertiefung 11 angeordnet, die eine Hinterschneidung ausbildet.

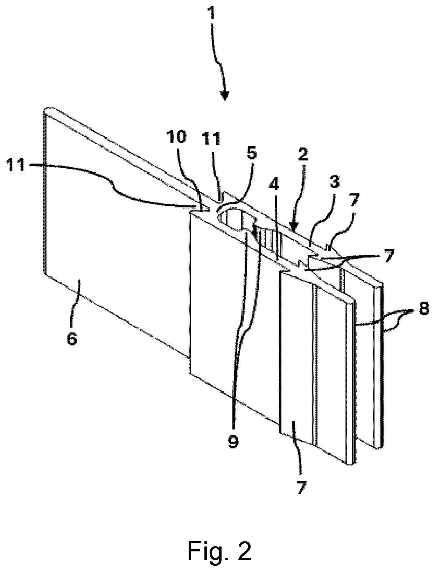

Fig. 2 zeigt eine schematische und perspektivische Darstellung eines Längenabschnitts der in Fig. 1 gezeigten Verbindungseinheit 1, wodurch der Aufbau der Verbindungseinheit 1 noch einmal verdeutlich wird.

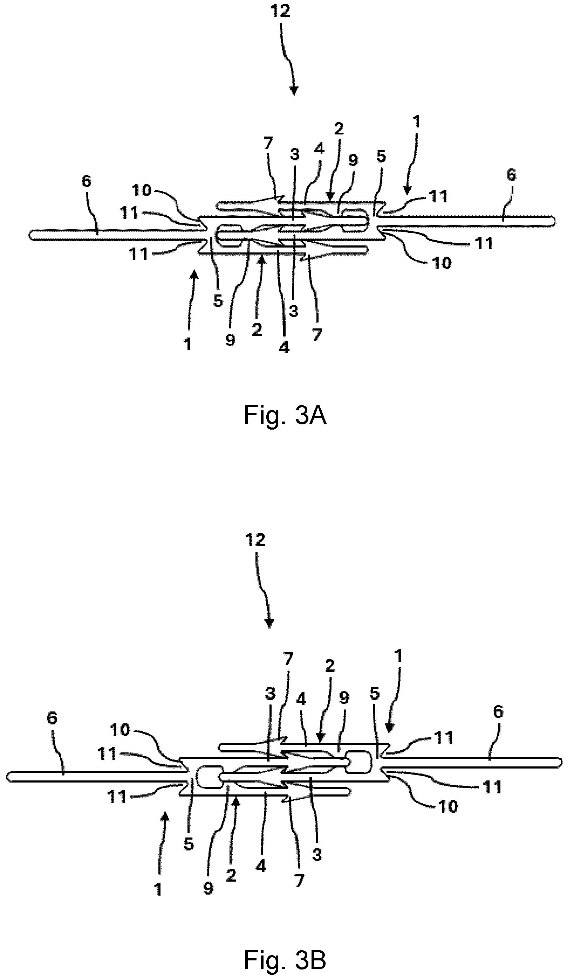

Fig. 3A zeigt eine schematische Stirnansicht eines Ausführungsbeispiels für eine erfindungsgemäße Verbindungsvorrichtung 12 zum Herstellen einer zerstörungsfrei lösbaren Verbindung zwischen wenigstens zwei nicht gezeigten Objekten in einem ersten Belastungszustand.

Die Verbindungsvorrichtung 12 weist zwei Verbindungseinheiten 1 auf, die jeweils entsprechend dem in den Fign. 1 und 2 gezeigten Ausführungsbeispiel ausgebildet sind. Eine der beiden Verbindungseinheiten 1 ist an dem einen Objekt befestigbar und die andere der beiden Verbindungseinheiten 1 ist an dem anderen Objekt befestigbar.

In Fig. 3A sind die beiden Verbindungseinheiten 1 derart ineinander eingefügt, dass sie zerstörungsfrei lösbar miteinander verbunden sind. Zum Herstellen dieser Verbindung können die Verbindungseinheiten quer zu ihren senkrecht auf der Zeichenebene von Fig. 3A stehenden Längsrichtungen aufeinander zu bewegt worden sein, bis der in Fig. 3A gezeigte Zustand erreicht ist. Alternativ können die Verbindungseinheiten 1 parallel zu ihren Längserstreckungen ineinandergeschoben worden sein.

In dem in Fig. 3A gezeigten ersten Belastungszustand der Verbindungsvorrichtung 12 ist die Verbindungsvorrichtung 12 auf Druck belastet, wobei sich das freie Ende 8 von einem der Verbindungsschenkel 3 der jeweiligen Verbindungseinheit 1 an dem Steg 5 der jeweils anderen Verbindungseinheit 1 abstützt. In diesem ersten Belastungszustand der Verbindungsvorrichtung 12 sind die Hakenvorsprünge 7 der einen Verbindungseinheit 1 in einem Abstand zu den Hakenvorsprüngen 7 der anderen Verbindungseinheit 1 angeordnet.

Fig. 3B zeigt eine schematische Stirnansicht der in Fig. 3A gezeigten Verbindungsvorrichtung 12 in einem zweiten Belastungszustand. In dem in Fig. 3B gezeigten zweiten Belastungszustand der Verbindungsvorrichtung 12 ist die Verbindungsvorrichtung 12 auf Zug belastet. Hierbei kontaktieren bzw. hintergreifen die Hakenvorsprünge 7 der einen Verbindungseinheit 1 die Hakenvorsprünge 7 der anderen Verbindungseinheit 1. Die freien Enden 8 der Verbindungsschenkel 3 der einen Verbindungseinheit 1 sind in einem Abstand zu dem Steg 5 der jeweils anderen Verbindungseinheit 1 angeordnet.

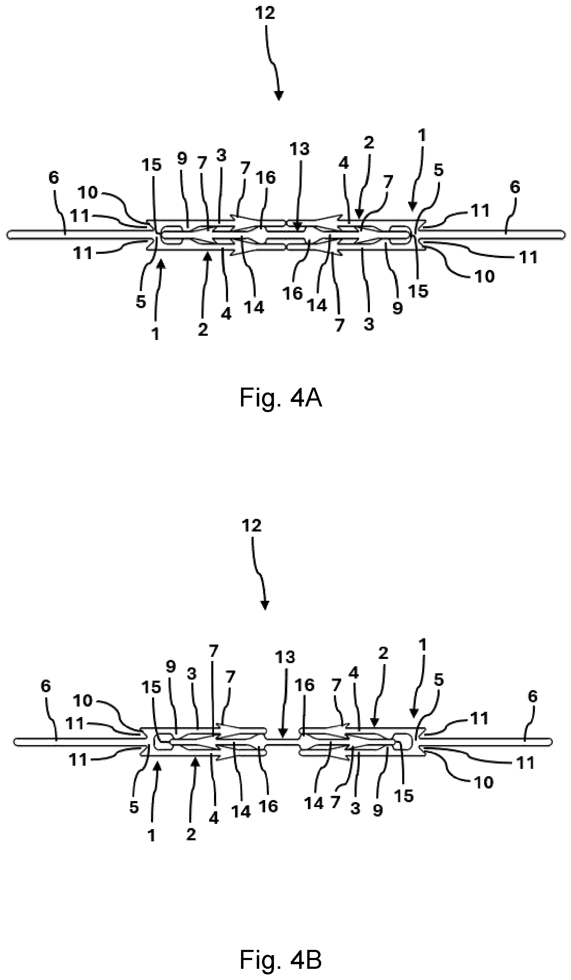

Fig. 4A zeigt eine schematische Stirnansicht eines weiteren Ausführungsbeispiels für eine erfindungsgemäße Verbindungsvorrichtung 12 zum Herstellen einer zerstörungsfrei lösbaren Verbindung zwischen wenigstens zwei nicht gezeigten Objekten in einem ersten Belastungszustand.

Die Verbindungsvorrichtung 12 unterscheidet sich dadurch von dem in den Fign. 3A und 3B gezeigten Ausführungsbeispiel, dass die Verbindungsvorrichtung 12 zusätzlich eine bandförmig ausgebildete Verbindungsleiste 13 aufweist. Die Verbindungsleiste 13 ist vollständig aus einem Kunststoff hergestellt und monolithisch ausgebildet.

Die Verbindungsleiste 13 ist jeweils hälftig in die Verbindungseinheiten 1 eingefügt, so dass die Verbindungseinheiten 1 über die Verbindungsleiste 13 mittelbar zerstörungsfrei lösbar miteinander verbunden sind. Zum Herstellen dieser Verbindung kann die Verbindungsleiste 13 quer zu ihrer senkrecht auf der Zeichenebene von Fig. 4A stehenden Längsrichtung nacheinander oder gleichzeitig auf die Verbindungseinheiten 1 zu bewegt worden sein, bis der in Fig. 4A gezeigte Zustand erreicht ist. Alternativ kann die Verbindungsleiste 13 parallel zu ihrer Längserstreckung in die Verbindungseinheiten 1 geschoben worden sein.

Die Verbindungsleiste 13 weist auf einander gegenüberliegenden Seiten einer senkrecht auf der Zeichenebene von Fig. 4A stehenden Längsmittelachse der Verbindungsleiste 13 angeordnete Verbindungsabschnitte 14 auf. Auf einander gegenüberliegenden Seiten des jeweiligen Verbindungsabschnitts 14 der Verbindungsleiste 13 sind im Querschnitt keilförmig ausgebildete, sich in Längsrichtung der Verbindungsleiste 13 erstreckende und sich zum jeweilig nächstliegend angeordneten Längsrand 15 der Verbindungsleiste 13 hin verjüngende Hakenvorsprünge 7 angeordnet. Die Hakenvorsprünge 7 sind entsprechend den Hakenvorsprüngen 7 der Verbindungseinheiten 1 ausgebildet.

An einander abgewandten Seiten des jeweiligen Verbindungsabschnitts 14 der Verbindungsleiste 13 ist in einem zwischen den Hakenvorsprüngen 7 und der Längsmittelachse der Verbindungsleiste 13 angeordneten Bereich jeweils wenigstens ein in Längsrichtung der Verbindungsleiste 13 verlaufender Führungsvorsprung 15 angeordnet, wobei die Führungsvorsprünge 15 in einem Abstand relativ zueinander angeordnet sind. Jeder Führungsvorsprung 16 der Verbindungsleiste 13 ist im Querschnitt keilförmig ausgebildet, wobei sich der jeweilige Führungsvorsprung 16 zum jeweilig nächstliegend angeordneten Längsrand 15 der Verbindungsleiste 13 hin verjüngt.

In dem in Fig. 4A gezeigten ersten Belastungszustand der Verbindungsvorrichtung 12 ist die Verbindungsvorrichtung 12 auf Druck belastet, wobei sich die Längsränder 16 der Verbindungsleiste 13 an den Stegen 5 der Verbindungseinheiten 1 abstützt. In diesem ersten Belastungszustand der Verbindungsvorrichtung 12 sind die Hakenvorsprünge 7 der Verbindungsleiste 13 in einem Abstand zu den Hakenvorsprüngen 7 der Verbindungseinheiten 1 angeordnet.

Fig. 4B zeigt eine schematische Stirnansicht der in Fig. 4A gezeigten Verbindungsvorrichtung 12 in einem zweiten Belastungszustand. In dem in Fig. BB gezeigten zweiten Belastungszustand der Verbindungsvorrichtung 12 ist die Verbindungsvorrichtung 12 auf Zug belastet. Hierbei kontaktieren bzw. hintergreifen die Hakenvorsprünge 7 der Verbindungsleiste 13 die Hakenvorsprünge 7 der Verbindungseinheiten 1. Die Längsränder 15 der Verbindungsleiste 13 sind in einem Abstand zu den Stegen 5 der Verbindungseinheiten 1 angeordnet.

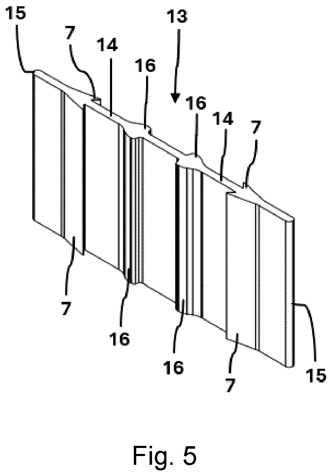

Fig. 5 zeigt eine schematische und perspektivische Darstellung eines Abschnitts der in den Fign. 4A und 4B gezeigten Verbindungsleiste 13, wodurch der Aufbau der Verbindungsleiste 13 noch einmal verdeutlich wird.

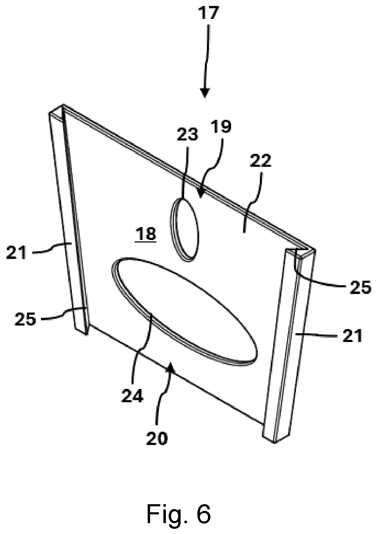

Fig. 6 zeigt eine schematische und perspektivische Darstellung eines Ausführungsbeispiels für eine Schließeinheit 17 für eine nicht weitergehender gezeigte erfindungsgemäße Schließvorrichtung. Die Schließvorrichtung kann im Übrigen beispielsweise gemäß dem in den Fign. 3A und 3B oder dem in den Fign. 4A bis 5 gezeigten Ausführungsbeispiel ausgebildet sein. Dementsprechend kann das Schließeinheit 17 zum Verbinden der in den Fign. 1 bis 4B gezeigten Verbindungseinheiten miteinander oder zum Verbinden der Verbindungseinheiten mit der in den Fign. 4B bis 5 gezeigten Verbindungsleiste verwendet werden.

Die Schließeinheit 17 weist eine trapezförmig ausgebildete Schließaufnahme 18 auf, die von einem aufgeweitet ausgebildeten eingangsseitigen Ende 19 der Schließeinheit 17 durchgehend zu einem verjüngt ausgebildeten ausgangsseitigen Ende 20 der Schließeinheit 17 verläuft und seitlich durch jeweils einen Schließvorsprung 21 der Schließeinheit 17 begrenzt ist. Die Schließvorsprünge 21 sind seitlich an einer Grundplatte 22 der Schließeinheit 17 angeordnet. An der Grundplatte 22 sind zwei Öffnungen 23 und 24 unterschiedlicher Größe angeordnet. In die Öffnung 24 kann beispielsweise manuell eingegriffen werden, um die Schließeinheit 17 zur Durchführung eines Schließvorgangs, bei dem die Verbindungseinheiten miteinander oder mit der Verbindungsleiste verbunden werden, betätigen zu können.

An einer dem jeweils anderen Schließvorsprung 21 zugewandten Seite des jeweiligen Schließvorsprungs 21 ist eine sich über die gesamte Länge des jeweiligen Schließvorsprungs 21 erstreckende Hinterschneidung 25 ausgebildet. Hierdurch kann der jeweilige Schließvorsprung 21 in eine in den Fign. 1 bis 4B gezeigte Nut an der Außenseite der jeweiligen Verbindungseinheit eingreifen.

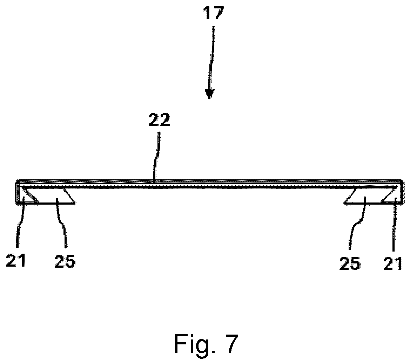

Fig. 7 zeigt eine schematische Stirnansicht der in Fig. 6 gezeigten Schließeinheit 17, wodurch der Aufbau der Schließeinheit 17 noch einmal verdeutlich wird.

### Bezugszeichenliste

- 1: Verbindungseinheit
- 2: Verbindungsabschnitt von 1
- 3: Verbindungsschenkel
- 4: Verbindungsschenkel
- 5: Steg
- 6: Befestigungsabschnitt
- 7: Hakenvorsprung
- 8: freies Ende von 3, 4
- 9: Führungsvorsprung an 3, 4
- 10: Außenseite von 5
- 11: Vertiefung an 10
- 12: Verbindungsvorrichtung
- 13: Verbindungsleiste
- 14: Verbindungsabschnitt von 13
- 15: Längsrand von 13
- 16: Führungsvorsprung an 13
- 17: Schließeinheit
- 18: Schließaufnahme
- 19: aufgeweitetes Ende von 17
- 20: verjüngtes Ende von 17
- 21: Schließvorsprung
- 22: Grundplatte
- 23: Öffnung an 22
- 24: Öffnung an 22
- 25: Hinterschneidung an 21
- A: Abstand zwischen 7 und 8
- L: Länge von 3, 4

## Patentansprüche

1. Verbindungseinheit (1) zum Herstellen einer zerstörungsfrei lösbaren Verbindung zwischen wenigstens zwei Objekten, **gekennzeichnet durch** wenigstens einen im Querschnitt U-förmig ausgebildeten Verbindungsabschnitt (2), der zwei parallel zueinander verlaufende Verbindungsschenkel (3, 4) und einen die Verbindungsschenkel (3, 4) randseitig miteinander verbindenden Steg (5) aufweist, und wenigstens einen mit dem Steg (5) verbundenen Befestigungsabschnitt (6), über den die Verbindungseinheit (1) an einem der Objekte befestigbar ist, wobei auf einander gegenüberliegenden Seiten des jeweiligen Verbindungsschenkels (3, 4) im Querschnitt keilförmig ausgebildete, in Längsrichtung der Verbindungseinheit (1) verlaufende und sich jeweils von dem Befestigungsabschnitt (6) weg verjüngende Hakenvorsprünge (7) angeordnet sind.

2. Verbindungseinheit (1) nach Anspruch 1, **dadurch gekennzeichnet, dass** an einander zugewandten Seiten der Verbindungsschenkel (3, 4) in einem zwischen den Hakenvorsprüngen (7) und dem Steg (5) angeordneten Bereich jeweils wenigstens ein in Längsrichtung der Verbindungseinheit (1) verlaufender Führungsvorsprung (9) angeordnet ist, wobei die Führungsvorsprünge (9) in einem Abstand (A) relativ zueinander angeordnet sind.

3. Verbindungseinheit (1) nach Anspruch 2, **dadurch gekennzeichnet, dass** wenigstens ein Führungsvorsprung (9) im Querschnitt keilförmig ausgebildet ist und sich von dem Befestigungsabschnitt (6) weg verjüngt.

4. Verbindungseinheit (1) nach einem der Ansprüche 1 bis 3, **dadurch gekennzeichnet, dass** die Hakenvorsprünge (7) an einem freien Endabschnitt des jeweiligen Verbindungsschenkels (3, 4) angeordnet sind, dessen Länge kürzer als eine Hälfte einer Länge (L) des jeweiligen Verbindungsschenkels (3, 4) ist, wobei die Hakenvorsprünge (7) in einem Abstand (A) zu dem freien Ende (8) des freien Endabschnitts des jeweiligen Verbindungsschenkels (3, 4) angeordnet sind.

5. Verbindungseinheit (1) nach einem der Ansprüche 1 bis 4, **dadurch gekennzeichnet, dass** der Befestigungsabschnitt (6) im Querschnitt mit einem mittigen Bereich einer Außenseite (10) des Stegs (5) verbunden ist, wobei zwischen einem jeweiligen Längsrand der Außenseite (10) des Stegs (5) und dem Befestigungsabschnitt (6) eine sich über eine Länge des Stegs (5) erstreckende, nutförmig ausgebildete Vertiefung (11) angeordnet ist.

6. Verbindungseinheit (1) nach einem der Ansprüche 1 bis 5, **dadurch gekennzeichnet, dass** die Verbindungseinheit (1) zumindest teilweise aus einem Kunststoff hergestellt ist.

7. Verbindungseinheit (1) nach einem der Ansprüche 1 bis 6, **dadurch gekennzeichnet, dass** die Verbindungseinheit (1) monolithisch ausgebildet ist.

8. Verbindungsvorrichtung (12) zum Herstellen einer zerstörungsfrei lösbaren Verbindung zwischen wenigstens zwei Objekten, **gekennzeichnet durch** wenigstens zwei Verbindungseinheiten (1) nach einem der Ansprüche 1 bis 7, wobei eine der Verbindungseinheiten (1) an dem einen Objekt befestigbar ist und die andere der Verbindungseinheiten (1) an dem anderen Objekt befestigbar ist.

9. Verbindungsvorrichtung (12) nach Anspruch 8, **gekennzeichnet durch** wenigstens eine bandförmig ausgebildete Verbindungsleiste (13), die auf einander gegenüberliegenden Seiten einer Längsmittelachse der Verbindungsleiste (13) angeordnete Verbindungsabschnitte (14) aufweist, wobei auf einander gegenüberliegenden Seiten des jeweiligen Verbindungsabschnitts (14) der Verbindungsleiste (13) im Querschnitt keilförmig ausgebildete, sich in Längsrichtung der Verbindungsleiste (13) erstreckende und sich zum jeweilig nächstliegend angeordneten Längsrand (15) der Verbindungsleiste (13) hin verjüngende Hakenvorsprünge (7) angeordnet sind.

10. Verbindungsvorrichtung (12) nach Anspruch 9, **dadurch gekennzeichnet, dass** an einander abgewandten Seiten des jeweiligen Verbindungsabschnitts (14) der Verbindungsleiste (13) in einem zwischen den Hakenvorsprüngen (7) und der Längsmittelachse der Verbindungsleiste (13) angeordneten Bereich jeweils wenigstens ein in Längsrichtung der Verbindungsleiste (13) verlaufender Führungsvorsprung (16) angeordnet ist, wobei die Führungsvorsprünge (16) in einem Abstand relativ zueinander angeordnet sind.

11. Verbindungsvorrichtung (12) nach Anspruch 10, **dadurch gekennzeichnet, dass** wenigstens ein Führungsvorsprung (16) der Verbindungsleiste (13) im Querschnitt keilförmig ausgebildet ist und sich zum jeweilig nächstliegend angeordneten Längsrand (15) der Verbindungsleiste (13) hin verjüngt.

12. Verbindungsvorrichtung (12) nach einem der Ansprüche 9 bis 11, **dadurch gekennzeichnet, dass** die Verbindungsleiste (13) zumindest teilweise aus einem Kunststoff hergestellt ist.

13. Verbindungsvorrichtung (12) nach einem der Ansprüche 9 bis 12, **dadurch gekennzeichnet, dass** die Verbindungsleiste (13) monolithisch ausgebildet ist.

14. Verbindungsvorrichtung (12) nach einem der Ansprüche 8 bis 13, **gekennzeichnet durch** wenigstens eine Schließeinheit (17) zum Verbinden der Verbindungseinheiten (1) miteinander oder zum Verbinden der beiden Verbindungseinheiten (1) mit der Verbindungsleiste (13), wobei die Schließeinheit (17) eine trapezförmig ausgebildete Schließaufnahme (18) aufweist, die von einem aufgeweitet ausgebildeten eingangsseitigen Ende (19) der Schließeinheit (17) durchgehend zu einem verjüngt ausgebildeten ausgangsseitigen Ende (20) der Schließeinheit (17) verläuft und seitlich durch jeweils einen Schließvorsprung (21) der Schließeinheit (17) begrenzt ist.

15. Verbindungsvorrichtung (12) nach Anspruch 14, **dadurch gekennzeichnet, dass** an einer dem jeweils anderen Schließvorsprung (21) zugewandten Seite des jeweiligen Schließvorsprungs (21) eine sich über die gesamte Länge des jeweiligen Schließvorsprungs (21) erstreckende Hinterschneidung (25) ausgebildet ist.
